# EUROPÄISCHE PATENTSCHRIFT

(11) **EP 4 251 573 B1**
(45) Veröffentlichungstag und Bekanntmachung des Hinweises auf die Patenterteilung: **28.08.2024**
(21) Anmeldenummer: 21806740.3
(22) Anmeldetag: 10.11.2021
(51) Int. Cl.: C01G 33/00, B01J 31/36, B01J 35/00, C01B 3/04

(54) **SCHICHTNIOBATE FÜR DIE VERWENDUNG IN PHOTOKATALYSATOREN**
SHEET NIOBATES FOR USE IN PHOTOCATALYSTS
NIOBATES EN FEUILLE DESTINÉS À ÊTRE UTILISÉS DANS DES PHOTOCATALYSEURS

(30) Priorität: 27.11.2020 DE 102020214923
(43) Veröffentlichungstag der Anmeldung: 04.10.2023
(73) Patentinhaber: TANIOBIS GmbH, 38642 Goslar (DE)
(72) Erfinder: SCHNITTER, Christoph, 31188 Holle (DE); ALBRECHT, Sven, 38642 Goslar (DE); MARSCHALL, Roland, 95447 Bayreuth (DE); KULISCHOW, Natalia, 16816 Neuruppin (DE); LADASIU CIOLACU, Flaviu Calin, 310355 Arad (RO)
(86) Internationale Anmeldenummer: PCT/EP2021/081245
(87) Internationale Veröffentlichungsnummer: WO 2022/112002

(56) Entgegenhaltungen:
- WANG XUEFENG: "Determination of Local Structures of Layered Niobate, Niobate Nanosheet and Mesoporous Niobium Oxide by Solid State NMR and PXRD - Dissertation for The degree of Doctor of Philosophy in the Department of Chemistry", 1 January 2009 (2009-01-01), pages 1 - 215, XP055891793, Retrieved from the Internet <URL:https://www.proquest.com/docview/304864100?pq-origsite=gscholar&fromopenview=true> [retrieved on 20220215]
- ZHONG ZHAOHUI ET AL: "The ferroelectricity of perovskite-type oxides with alkylamine interlayer", APPLIED PHYSICS LETTERS, AMERICAN INSTITUTE OF PHYSICS, 2 HUNTINGTON QUADRANGLE, MELVILLE, NY 11747, vol. 75, no. 13, 27 September 1999 (1999-09-27), pages 1958 - 1960, XP012023626, ISSN: 0003-6951, DOI: 10.1063/1.124884
- DOMEN KAZUNARI ET AL: "Ion exchangeable layered niobates as a noble series of photocatalysts", RESEARCH ON CHEMICAL INTERMEDIATES, vol. 20, no. 9, 1 January 1994 (1994-01-01), NL, pages 895 - 908, XP055892677, ISSN: 0922-6168, DOI: 10.1163/156856794X00270
- LADASIU CALIN ET AL: "Tuning the photocatalytic activity of layered perovskite niobates by controlled ion exchange and hydration", CATALYSIS SCIENCE & TECHNOLOGY, 24 January 2022 (2022-01-24), UK, XP055891798, ISSN: 2044-4753, Retrieved from the Internet <URL:https://pubs.rsc.org/en/content/articlepdf/2022/cy/d1cy02057a> DOI: 10.1039/D1CY02057A

## Beschreibung

Die vorliegende Erfindung betrifft Schichtniobate der Formel HₐA_{b}Sr₂Nb₃O₁₀, wobei H für eine Gruppe steht, die die Elemente H⁺ und H₃O⁺ umfasst und A für ein Element der Gruppe K⁺, Cs⁺ und Rb⁺ steht, mit 0,6 ≤ a ≤ 1 und 0 ≤ b ≤ 0,4, mit a+b = 1, die sich dadurch auszeichnen, dass sie unterschiedliche Schichtabstände aufweisen, ein Verfahren zu deren Herstellung sowie deren Verwendung in Photokatalysatoren.

Bei der Fotosynthese wird Sonnenlicht in chemische Energie umgewandelt, wobei aus Kohlendioxid und Wasser Zucker gebildet wird, der in Pflanzen in Form von Zellulose gespeichert wird, wobei die ursprüngliche Energie durch Verbrennung der Pflanzen wieder nutzbar wird. Auf einem ähnlichen Prinzip beruht die Speicherung von Sonnenenergie in Form von Wasserstoff. Wasser kann mit Hilfe von Sonnenlicht in Gegenwart eines Katalysators in Wasserstoff und Sauerstoff gespalten werden. Wird der Wasserstoff wiederum verbrannt, setzt er dabei Energie und Wasser frei und kann somit beispielsweise als alternative Energiequelle genutzt werden. Diese Form der Energiegewinnung hat den Vorteil, dass, anders als etwa bei der Verbrennung von Holz oder anderen fossilen Rohstoffen, keine umweltschädigenden Nebenprodukte entstehen und sie im Gegensatz zur Wind- oder Solarenergie unabhängig von Tageszeit und Wetterlage ist. Gegenüber der klassischen Wasserelektrolyse weist die photokatalytische Wasserspaltung weiterhin die Vorteile moderater Reaktionsbedingungen und relativ geringen technischen Anforderungen auf.

Erste Photokatalysatoren auf Basis von Titandioxid wurden bereits in den 1970er Jahren vorgestellt, allerdings gelang es nicht, die Effizienz dieses Prozesses so weit zu steigern, dass sich Wasserstoff in großen Mengen produzieren ließ. Eine Verbindungsklasse, die in dieser Hinsicht als vielversprechend angesehen wird, sind Schichtperowskite des Dion-Jacobson-Typs der allgemeinen Formel

MAₙ₋₁BₙO₃ₙ₊₁,

wobei M für ein Alkalimetall, A für ein Erdalkalimetall oder Seltenerdmetall und B für ein fünfwertiges Metall, in der Regel Tantal oder Niob, steht, wobei im Fall von Niob diese Verbindungen auch als Schichtniobate bezeichnet werden. Diese Verbindungen sind aus negativ geladenen Perowskit-Hauptschichten der allgemeinen Formel [Aₙ₋₁(BₙO₃ₙ₊₁)]⁻ aufgebaut, zwischen denen die Alkalimetall-Ionen als positive Zwischenschichten eingelagert sind. Aufgrund ihrer Schichtstruktur und dem relativ großen Abstand zwischen den Schichten lassen sich diese Verbindungen leicht durch Ionenaustausch modifizieren. So können beispielweise die Alkalimetall-Ionen durch Protonen und Wassermoleküle in den Zwischenschichten ersetzt werden, wodurch die photokatalytische Aktivität, also die Menge an produziertem Wasserstoff bei Bestrahlung mit Licht, solcher Verbindungen gesteigert werden kann.

In der Literatur sind umfangreiche Untersuchungen zu Schichtperowskiten und ihrer Aktivität bezüglich photokatalytischer Wasserstoffentwicklung veröffentlicht.

Domen et al untersuchten in ihrem Artikel "Ion exchangeable layeredniobates as a noble series of photocatalysts", veröffentlicht 1994 in Res. Chem. Intermed., Vol. 20, Nr. 9, Seiten 895 bis 908, die Abhängigkeit des Schichtabstands und der Wasserstoffentwicklung für KCa₂Nb₃O₁₀. Dabei wurde gefunden, dass der Schichtabstand mit zunehmendem Protonierungsgrad stufenweise zunahm, wobei die stufenweise Erhöhung des Schichtabstands auf die unterschiedlichen Hydratationsgrade, also den Einbau von Wassermolekülen zusammen mit den Protonen in die Zwischenschichten, zurückgeführt wurde. Ab einem Austauschgrad von 60% wurde ein deutlicher Anstieg der Wasserstoffbildungsrate beobachtet, der damit erklärt wurde, dass bei hohen Schichtabständen Methanol-Moleküle in die Zwischenschichten gelangen und dort als Elektronenlochfänger fungieren. Die Autoren gehen davon aus, dass auf diese Weise die Rekombinationsrate zwischen Elektronen und Elektronenlöchern verringert werden kann, so dass mehr Elektronen für die Reduktion der Wassermoleküle zu Wasserstoff zur Verfügung stehen.

Huang et al zeigen in dem Artikel "Photocatalytic property of partially substituted Ptintercalated layeredperovskite, ASr2TaxNb3-xO10 (A = K, H; x = 0, 1, 1.5, 2 and 3)", erschienen in Solar Energy Materials & Solar Cells 95, (2011) 1019-1027, XRD-Spektren und Wasserstoffbildungsraten unter anderem für HSr₂(Ta/Nb)₃O₁₀. Für diese Verbindung wird ein Schichtabstand von 15.04 Å angegeben, der nach Umsetzung mit Säure zu HSr₂Nb₃O₁₀ bei 16.53 Å lag. Die Wasserstoffentwicklung aus 10 %iger Methanollösung unter Bestrahlung mit einer Quecksilberdampflampe zeigte für die protonierte Verbindung HSr₂Nb₃O₁₀ höhere Werte als für den Standardphotokatalysator TiO₂ P25.

In der Veröffentlichung "Comparison of two- and three-layer restacked Dion-Jacobson phase niobate nanosheets as catalysts for photochemical hydrogen evolution" von Maeda et al in J. Mater. Chem, 2009, 19, 4813-4818, werden geschichtete Niobat-Nanosheets durch Exfolierung der entsprechenden Dion-Jacobson-Schichtperowskite (HCa₂Nb₃O₁₀, HSr₂Nb₃O₁₀ und HLₐNb₂O₇) mit Tetra(n-butyl)ammonium und anschließender Behandlung mit Salzsäure hergestellt und ihre photokatalytischen Eigenschaften vermessen und mit denen herkömmlicher Verbindungen verglichen.

Fang et al beschreiben im Journal of Wuhan University of Technology - Mater. Sei. Ed., 2002, Vol. 7, Nr. 2, unter dem Titel "Synthesis and characterization of a new triple-layered Perovskite KSr2Nb3O10 and its protonated compounds*"* die Herstellung von KSr₂Nb₃O₁₀ durch Festkörpersynthese, gefolgt von einer Behandlung mit Säure, um mittels Protonenaustausch die Verbindung HSr₂Nb₃O₁₀*1,5 H₂O zu erhalten. Als Schichtabstände werden für die beiden Verbindungen 15,0 Å (KSr₂Nb₃O₁₀) beziehungsweise 16,4 Å (HSr₂Nb₃O₁₀*1,5 H₂O) angegeben.

Im Auszug aus Wang Xuefeng: "Determination of Local Structures of Layered Niobate, Niobate Nanosheet and Mesoporous Niobium Oxide by Solid State NMR and PXRD - Dissertation for The degree of Doctor of Philosophy in the Department of Chemistry", 1. Januar 2009 (2009-01-01), Seiten 1-215, wird die Herstellung von HSr₂Nb₃O₁₀ beschrieben, wobei KSr₂Nb₃O₁₀ mit wässriger Salpetersäure bei einer Temperatur von 80°C behandelt wird.

Auch wenn bereits eine Reihe von Verbindungen bekannt sind, die eine gute photokatalytische Aktivität aufweisen, besteht weiterhin der Bedarf nach Photokatalysatoren mit einer verbesserten Effizienz, die für die solarchemische Spaltung von Wasser eingesetzt werden können.

Es wurde überraschend gefunden, dass diese Aufgabe durch neuartige Schichtniobate gelöst wird, die sich dadurch auszeichnen, dass sie im protonierten Zustand unterschiedliche Schichtabstände aufweisen.

Daher ist ein erster Gegenstand der vorliegenden Erfindung ein Schichtniobat der Formel [HₐA_{b}]⁺[Sr₂Nb₃O₁₀]⁻, wobei [Sr₂Nb₃O₁₀]⁻ die Hauptschichten und [HₐA_{b}]⁺ die Zwischenschichten bilden, wobei H für eine Gruppe steht, die aus den Elementen H⁺ und H₃O⁺ besteht und A für ein Element der Gruppe K⁺, Cs⁺ und Rb⁺ steht, mit 0,6 ≤ a ≤ 1 und 0 ≤ b ≤ 0,4, mit a + b = 1, dadurch gekennzeichnet, dass das Schichtniobat unterschiedliche Abstände zwischen den Hauptschichten aufweist.

Vorzugsweise handelt es sich bei dem erfindungsgemäßen Schichtniobat um eines mit der Zusammensetzung [HₐA_{b}]⁺[Sr₂Nb₃O₁₀]⁻ mit 0,6 < a ≤ 1 und 0 ≤ b ≤ 0,4, mit a + b = 1, vorzugsweise 0,7 < a ≤ 1 und 0 ≤ b ≤ 0,3, besonders bevorzugt 0,8 < a ≤ 1 und 0 ≤ b ≤ 0,2, jeweils mit a + b = 1.

Bei dem erfindungsgemäßen Schichtniobat handelt es sich vorzugsweise um eines vom Typ der Schichtperowskite vom Dion-Jacobson-Typ M[Sr₂Nb₃O₁₀], wobei M für [HₐA_{b}] steht, wie oben definiert. So zeichnet sich das erfindungsgemäße Schichtniobat dadurch aus, dass zwischen den negativ geladenen Hauptschichten [Sr₂Nb₃O₁₀]⁻ die positiv geladenen Elemente M⁺ eingelagert sind. Die Abstände zwischen den einzelnen Schichten, die mittels XRD-Messungen bestimmt werden können, korrelieren mit der Größe der eingelagerten Elemente M⁺. Im erfindungsgemäßen Fall wurde überraschend gefunden, dass sich in dem Schichtniobat unterschiedliche Schichtabstände ausbilden, was sich im XRD-Diagramm durch die Verdopplung der entsprechenden Reflexe ausdrückt ("Doppelpeak"). Ohne an eine bestimmte Theorie gebunden zu sein, wird angenommen, dass ein inhomogener Einbau von Wasser und/oder hydratisierten Hydroniumionen in die Zwischenschichten dazu führt, dass der Schichtabstand zwischen einigen Schichten größer ist als zwischen anderen, das erfindungsgemäße Schichtniobat also zwei Phasen aufweist. Die Phase mit dem größeren Schichtabstand wird als eine hydratisierte Phase angenommen, während die Phase mit dem niedrigeren Schichtabstand als eine Phase ohne zusätzlichen Wassereinbau in den Zwischenschichten interpretiert wird. Überraschenderweise wurde festgestellt, dass die photokatalytische Aktivität des erfindungsgemäßen Schichtniobats mit Auftreten der beiden Phasen, hydratisiert und dehydratisiert, stark zunimmt. Insofern ist eine Ausführungsform der vorliegenden Erfindung bevorzugt, in der das Schichtniobat eine hydratisierte Phase und eine dehydratisierte Phase aufweist. Dabei weist die hydratisierte Phase Wassermoleküle und/oder hydratisierte Hydroniumionen (H₃O⁺*H₂O) in den Zwischenschichten auf, während die dehydratisierte Phase keine entsprechenden Moleküle in den Zwischenschichten aufweist.

Aus dem Stand der Technik ist bekannt, dass die photokatalytische Aktivität von Schichtperowskiten gesteigert werden kann, wenn zumindest ein Teil der üblicherweise in den Zwischenschichten eingelagerten Alkalimetall-Ionen mit Protonen ausgetauscht wird. Daher ist eine Ausführungsform der vorliegenden Erfindung bevorzugt, in der das Schichtniobat einen Protonierungsgrad von mindestens 60% aufweist, vorzugsweise mehr als 70%, besonders bevorzugt 80 bis 100%. Im Rahmen der vorliegenden Erfindung wird unter Protonierungsgrad der Anteil an Alkalimetall-Ionen in den Zwischenschichten bezeichnet, der durch Protonen ausgetauscht wurde, so dass der Protonierungsgrad durch Gehaltsbestimmung des ausgetauschten Alkalimetall-Ions beispielsweise mittels EDX bestimmt werden kann. Ein Protonierungsgrad von 60% ist daher dahingehend zu verstehen, dass 60% der üblicherweise in den Zwischenschichten eingelagerten Alkalimetall-Ionen durch Protonen ersetzt wurden. Der Protonierungsgrad kann dabei durch Vergleich des Alkalimetall-Ionengehalts zur unprotonierten Verbindung gemessen werden, wie oben beschrieben.

Das erfindungsgemäße Schichtniobat zeichnet sich insbesondere dadurch aus, dass es zwei Phasen mit unterschiedlichen Schichtabständen aufweist. Diese Phasen lassen sich mittels XRD-Messungen identifizieren. In einer bevorzugten Ausführungsform treten die 002- und 004-Röntgenbeugungsreflexe des erfindungsgemäßen Schichtniobats als zwei Reflexe ("Doppelpeak") auf. Im XRD-Spektrum des erfindungsgemäßen Schichtniobats treten daher die genannten Reflexe als Doppelreflexe auf, anstatt als Einzelreflexe wie in den Spektren herkömmlicher Schichtniobate.

Die photokatalytische Aktivität der erfindungsgemäßen Schichtniobate lässt sich dadurch steigern, dass zumindest ein Teil der in den Zwischenschichten eingelagerten Alkalimetall-Ionen durch Protonen ersetzt wird. Als besonders effizient hat sich dieser Austausch dann erwiesen, wenn es sich bei den Alkalimetall-Ionen um Kaliumionen handelt. Daher ist eine Ausführungsform der vorliegenden Erfindung besonders bevorzugt in der A ein Kaliumion ist. Ohne an eine bestimmte Theorie gebunden zu sein, wird davon ausgegangen, dass es insbesondere der Schritt der Protonierung ist, der zur Ausbildung der speziellen Struktur der erfindungsgemäßen Schichtniobate beiträgt. Daher wird in einer Ausführungsform das Schichtniobat dadurch hergestellt, dass eine Verbindung der Formel ASr₂Nb₃O₁₀, wobei A für ein Element der Gruppe K⁺, Cs⁺ und Rb⁺ steht, mit wässriger Salpetersäure (HNO₃) behandelt wird. Vorzugsweise erfolgt die Behandlung mit der wässrigen Salpetersäure bei einer Temperatur von 40 bis 70 °C, vorzugsweise 50 bis 65 °C. Die Dauer der Behandlung richtet sich nach dem gewünschten Protonierungsgrad und kann in einer bevorzugten Ausführungsform 3 bis 24 Stunden, vorzugsweise 5 bis 20 Stunden und besonders bevorzugt 12 bis 18 Stunden betragen. Weiterhin hat es sich als vorteilhaft erwiesen, die wässrige Salpetersäure während der Behandlung zu erneuern. Daher ist eine Ausführungsform besonders bevorzugt, bei der die wässrige Salpetersäurelösung alle 4 bis 10 Stunden, vorzugsweise alle 5 bis 8 Stunden durch eine frische Lösung ausgetauscht wird. In einer weiterhin bevorzugten Ausführungsform beträgt die Konzentration der wässrigen Salpetersäurelösung 0,5 bis 2,5 M, vorzugsweise 0,5 bis 1,5 M.

Ein weiterer Gegenstand der vorliegenden Erfindung ist ein Verfahren zur Herstellung des erfindungsgemäßen Schichtniobats, wobei das Verfahren das Behandeln einer Verbindung der allgemeinen Formel ASr₂Nb₃O₁₀, wobei A für ein Element der Gruppe Elemente K⁺, Cs⁺ und Rb⁺ steht, mit wässriger Salpetersäure (HNO₃) bei einer Temperatur von 40 bis 70 °C, vorzugsweise 50 bis 65 °C umfasst. Die Dauer der Behandlung richtet sich nach dem gewünschten Protonierungsgrad und kann in einer bevorzugten Ausführungsform 3 bis 24 Stunden, vorzugsweise 5 bis 20 Stunden und besonders bevorzugt 12 bis 18 Stunden betragen. Weiterhin hat es sich als vorteilhaft erwiesen, die wässrige Salpetersäure während der Behandlung zu erneuern. Daher ist eine Ausführungsform besonders bevorzugt, bei der die wässrige Salpetersäurelösung alle 4 bis 10 Stunden, vorzugsweise alle 5 bis 8 Stunden durch eine frische Lösung ausgetauscht wird. In einer weiterhin bevorzugten Ausführungsform beträgt die Konzentration der wässrigen Salpetersäurelösung 0,5 bis 2,5 M, vorzugsweise 0,5 bis 1,5 M.

Die Verbindung der allgemeinen Formel ASr₂Nb₃O₁₀, die als Ausgangsverbindung bei der Herstellung der erfindungsgemäßen Schichtniobate dient, wird vorzugsweise mittels Salzschmelzsynthese oder Festphasensynthese hergestellt.

Die erfindungsgemäßen Schichtniobate zeichnen sich durch eine hohe photokatalytische Aktivität aus. Daher ist ein weiterer Gegenstand der vorliegenden Erfindung die Verwendung des erfindungsgemäßen Schichtniobats als Photokatalysator, vorzugsweise als Photokatalysator in der photoinduzierten Wasserspaltung.

Ein weiterer Gegenstand der vorliegenden Erfindung ist ein Photokatalysator, der ein Schichtniobat gemäß der vorliegenden Erfindung umfasst. Es hat sich überraschend gezeigt, dass die Menge an Wasserstoff, die durch den erfindungsgemäßen Photokatalysator erzeugt wird, höher ist als die, die durch herkömmliche Photokatalysatoren unter gleichen Bedingungen erzielt wird. Vorzugsweise weist der erfindungsgemäße Photokatalysator weiterhin einen Rhodium-Cokatalysator auf.

Die Erfindung wird im Folgenden anhand von Beispielen näher erläutert, wobei diese keinesfalls als Einschränkung des Erfindungsgedankens zu verstehen sind.

### Beispiele:

KSr₂Nb₃O₁₀ wurde mittels Salzschmelzsynthese hergestellt, wie beispielsweise durch Kulischow et al in Catal. Today 2017, 287, 65-69 beschrieben.

KSr₂Nb₃O₁₀wurde in 1M HNO₃-Lösung bei 60 °C für verschiedene Zeitintervalle gerührt. Der Protonierungsgrad wurde mittels energiedispersiver Röntgenspektroskopie (energy dispersive X-ray spectroscopy, EDX) verfolgt.

Röntgenbeugungsanalysen wurden mittels eines PANalytical MPD Diffraktometers mit Cu-K_{α}-Strahlung (λ = 0,1541 nm) im 2Θ-Bereich von 5° bis 30° durchgeführt.

EDX-Elementaranalyse wurde mit einem Philips LEO Gemini 928 Feldemission-SEM bei 20 kV Beschleunigungsspannung durchgeführt.

Die photokatalytischen Untersuchungen wurden wie in Kulischow et al in Catal. Today 2017, 287, 65-69 beschrieben in einem doppelwandigen Quarz-Reaktor durchgeführt. Um thermische Einflüsse auszuschließen, wurde der Reaktor auf 10 °C gekühlt. Als Lichtquelle wurde eine 350 W Hg-Lampe verwendet. Zur Detektion des entstehenden Wasserstoffs wurde ein Shimadzu GC-2014 Gaschromatograph, ausgestattet mit einem Detektor für die thermische Leitfähigkeit (TCD) und RESTEK ShinCarbon ST 100/120-Säule, verwendet. Die Säule wurde während der Messung bei einer Temperatur von 35 °C gehalten und die Elutionszeit für H₂ betrug 1 Minute.

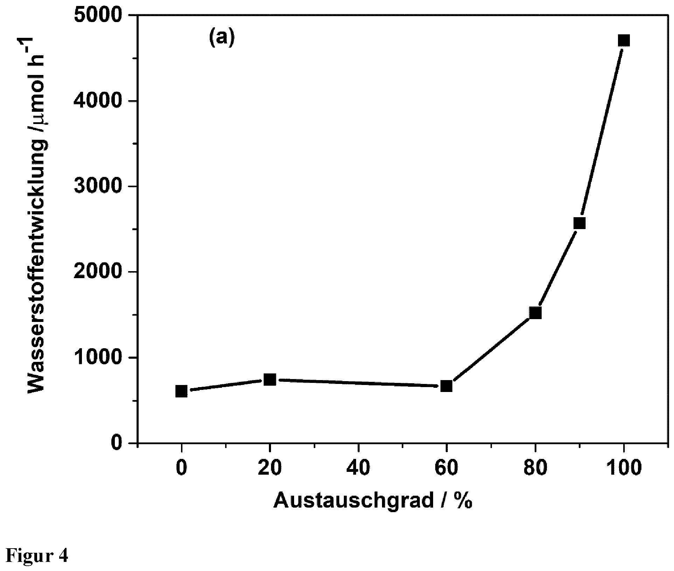

In einem typischen Experiment wurden 0,3 g des erfindungsgemäßen Schichtniobats mit 0,3 Gew.-% Rh(NH₃)₅Cl)Cl₂ als Cokatalysator unter Ultraschallbehandlung in 600 ml wässriger Methanollösung (10% v/v) suspendiert und dann mit der 350 W Hg-Lampe bestrahlt. Der Ausgangs-pH-Wert der Lösung wurde mit Perchlorsäure auf 3 eingestellt. Vor der Bestrahlung wurde das System mit Argon gespült, um die komplette Entfernung von Luft zu garantieren. Die Ergebnisse dieser photokatalytischen Messungen mit der 350 W Hg-Lampe an den Materialien mit unterschiedlichem Protonierungsgrad sind in Figur 4 dargestellt.

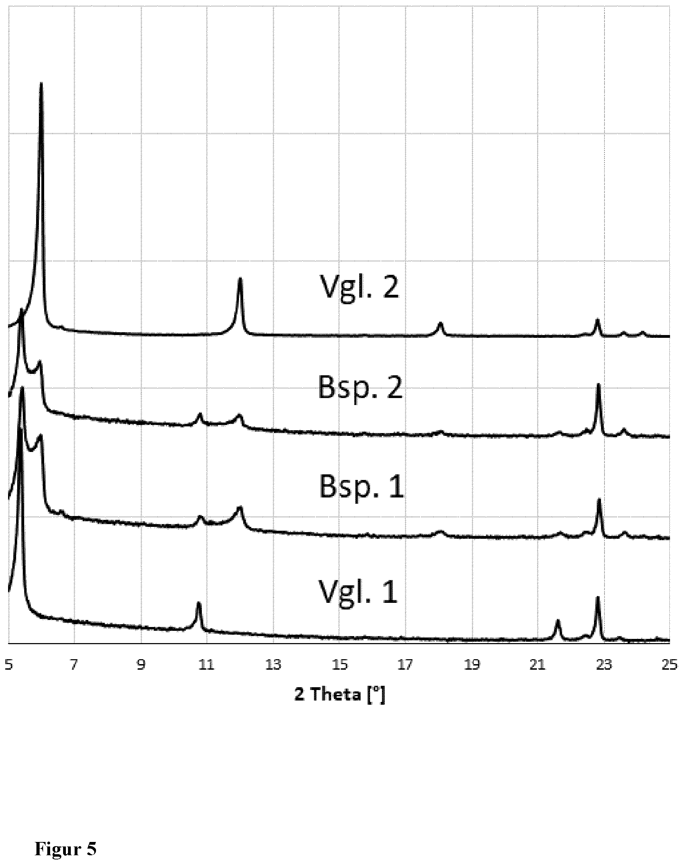

Weitere Schichtniobate wurden hergestellt, indem die Temperatur und die Dauer der Säurebehandlung variiert wurden. Die Behandlung mit 1M HNO₃ wurde bei 20 °C, 55 °C, 60 °C und 80 °C durchgeführt. Die Dauer der Behandlungen wurde so abgestimmt, dass bei allen Experimenten am Ende der Säurebehandlung ein ähnlicher Protonierungsgrad erzielt wurde, wobei bei 20 °C die längste Behandlung (172h) notwendig war. Die chemische Analyse der erhaltenen Schichtniobate ist in Tabelle 1 zusammengefasst, wobei zum Vergleich die Ausgangsverbindung KSr₂Nb₃O₁₀ aufgeführt ist. Die verwendeten Proben wiesen jeweils einen Austausch- beziehungsweise Protonierungsgrad von 83% auf, wobei jedoch nur die Proben der Beispiele 1 und 2, bei denen die Säurebehandlung bei 55 °C beziehungsweise 60 °C durchgeführt wurde, die erfindungsgemäßen unterschiedlichen Schichtabstände zeigten. Die entsprechenden XRD-Diagramme sind in Figur 5 wiedergegeben. Die Säurebehandlungen bei 20 °C beziehungsweise 80 °C (Vergleichsbeispiele 1 bzw. 2) zeigten in den XRD Diagrammen jeweils nur einen 002- und 004-Peak auf.

**Tabelle 1:**

| | | Analysen | | | Molverhältnisse bezogen auf Nb = 3 | | | |
|---|---|---|---|---|---|---|---|---|
| | Temperatur [°C] | K [Gew.-%] | Sr [Gew.-%] | Nb [Gew.-%] | H (1-K) | K | Sr | Nb |
| KSr₂Nb₃O₁₀ | - | 5,86 | 26,75 | 42,82 | - | 0,98 | 1,99 | 3 |
| Vgl. 1 | 20 | 1,06 | 27,84 | 44,35 | 0,83 | 0,17 | 2,00 | 3 |
| Bsp. 1 | 55 | 1,05 | 27,83 | 44,26 | 0,83 | 0,17 | 2,00 | 3 |
| Bsp. 2 | 60 | 1,05 | 27,81 | 44,14 | 0,83 | 0,17 | 2,00 | 3 |
| Vgl. 2 | 80 | 1,07 | 27,84 | 44,22 | 0,83 | 0,17 | 2,00 | 3 |

Ziel der Photokatalysator-Entwicklung ist die solare Wasserspaltung. Hg-Lampen erzeugen einen hohen Anteil an hochenergetischer UV-Strahlung, die zwar die photokatalytische Wasserstoffentwicklung erhöht, im Sonnenlichtspektrum jedoch nicht enthalten ist. Um die Anwendung für die solare Wasserspaltung zu prüfen, wurde eine Quarzglasküvette mit der Photokatalysator-Suspension aus den Schichtniobaten der Tabelle 1 mit Rh(NH₃)₅Cl)Cl₂ als Cokatalysator wie oben beschrieben anstelle der Hg-Lampe mit einer Xenon-Bogenlampe (Perkin Elmer Cermax E300BF) durch einen Solarsimulator-Filter bestrahlt. Um eine Temperaturerhöhung zu vermeiden, wurde ein Wasserfilter verwendet. Die Beleuchtungsstärke betrug 1283,9 mW/cm² auf der Küvette. Die gemessene Menge an Wasserstoff nach 5 Stunden ist in Tabelle 2 zusammengefasst:

| Probe | Vgl. 1 | Bsp. 1 | Bsp. 2 | Vgl. 2 |
|---|---|---|---|---|
| H₂ [µmol/h] | 400 | 493 | 545 | 418 |

Wie Tabelle 2 zu entnehmen ist, konnte durch die Verwendung der erfindungsgemäßen Schichtniobate (Bsp. 1 und Bsp. 2) eine deutlich höhere Wasserstoffproduktion erreicht werden.

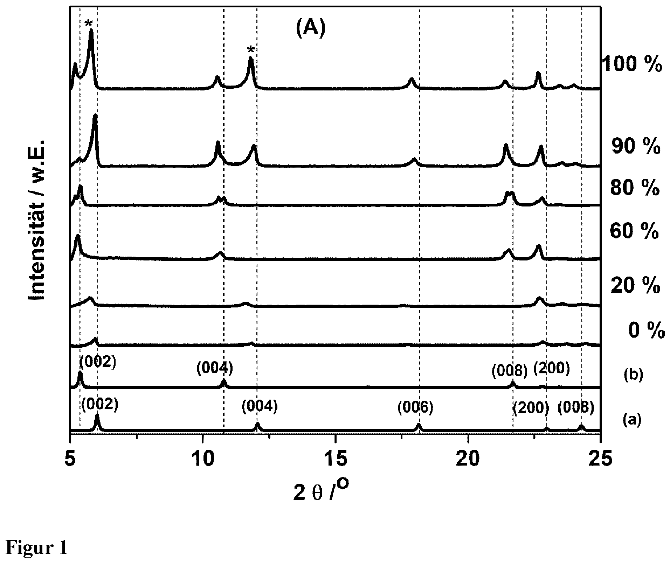

Figur 1 zeigt ein XRD-Diagramm eines erfindungsgemäßen Schichtperovskits der Formel [HₐK_{b}]Sr₂Nb₃O₁₀ (A) mit unterschiedlichen Protonierungsgraden, wobei K⁺ gegen H⁺ ausgetauscht wurde mit (a) Referenzdiagramm der 100% protonengetauschten, vollständig trockenen Verbindung und (b) Referenzdiagramm der 100% protonengetauschten, vollständig hydratisierten Verbindung.

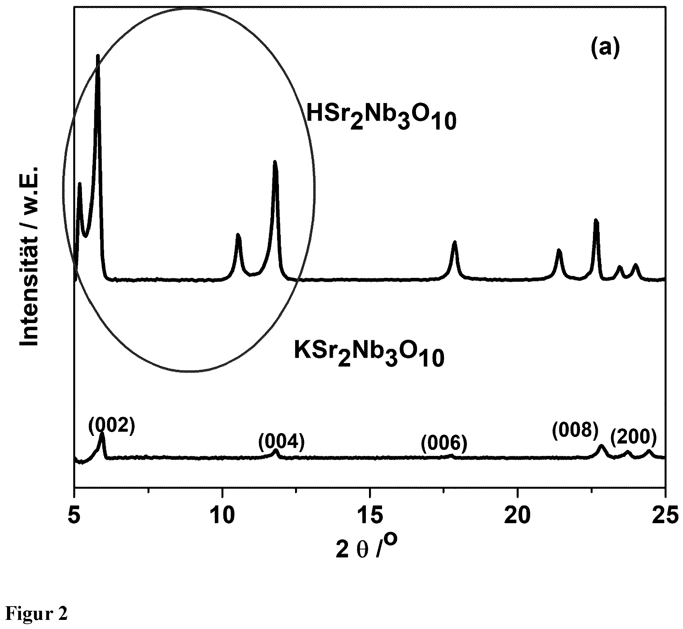

Figur 2 zeigt einen vergrößerten Ausschnitt aus einem XRD-Diagramm eines erfindungsgemäßen Schichtniobats, wobei deutlich die *00l*-Peaks des doppelstrukturierten Schichtniobats HSr₂Nb₃O₁₀* x H₂O zu erkennen sind. Der Abstand zwischen den Schichten beträgt 15,3 Å beziehungsweise 16,9 Å.

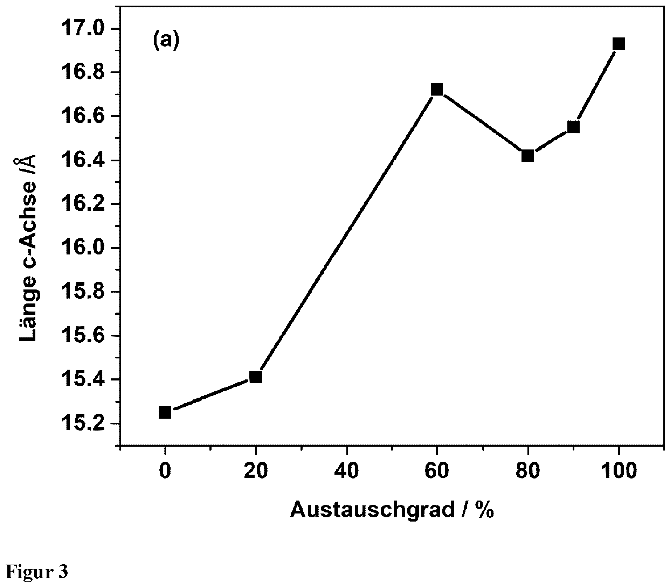

Figur 3 zeigt die Länge der c-Achse beziehungsweise den Schichtabstand in einem erfindungsgemäßen Schichtniobat in Abhängigkeit vom Austauschgrad K⁺ gegen H⁺.
Figur 4 zeigt die Abhängigkeit der Wasserstoffbildungsrate vom Austauschgrad K⁺ gegen H⁺ in einem erfindungsgemäßen Schichtniobat.
Figur 5 zeigt einen Vergleich der XRD-Diagramme der Schichtniobate der Tabelle 1, die in den beschriebenen Beispielen eingesetzt wurden, wobei deutlich die Aufspaltung der Schichtabstände ("Doppelpeak") zu erkennen ist (Bsp. 1 und Bsp. 2).

## Patentansprüche

1. Schichtniobat der Formel [HₐA_{b}]⁺[Sr₂Nb₃O₁₀]⁻, wobei [Sr₂Nb₃O₁₀]⁻ die Hauptschichten und [HₐA_{b}]⁺ die Zwischenschichten bilden, wobei H für eine Gruppe steht, die aus H⁺ und H₃O⁺ besteht und A für ein Element der Gruppe K⁺, Cs⁺ und Rb⁺ steht, mit 0,6 ≤ a ≤ 1 und 0 ≤ b ≤ 0,4, mit a + b = 1, **dadurch gekennzeichnet, dass** das Schichtniobat unterschiedliche Abstände zwischen den Hauptschichten aufweist.

2. Schichtniobat gemäß Anspruch 1, **dadurch gekennzeichnet, dass** es sich bei dem Schichtniobat um ein Schichtperowskit vom Dion-Jacobson-Typ handelt.

3. Schichtniobat gemäß wenigstens einem der vorangehenden Ansprüche, **dadurch gekennzeichnet, dass** das Schichtniobat eine hydratisierte und eine dehydratisierte Phase aufweist.

4. Schichtniobat gemäß wenigstens einem der vorangehenden Ansprüche, **dadurch gekennzeichnet, dass** das Schichtniobat einen Protonierungsgrad von wenigstens 60% aufweist, vorzugsweise mehr als 70%, besonders bevorzugt 80 bis 100%, wobei der Protonierungsgrad mittels EDX bestimmt wird.

5. Schichtniobat gemäß wenigstens einem der vorangehenden Ansprüche, **dadurch gekennzeichnet, dass** A ein Kalium-Ion ist.

6. Schichtniobat gemäß wenigstens einem der vorangehenden Ansprüche, **dadurch gekennzeichnet, dass** das Schichtniobat dadurch hergestellt wird, dass eine Verbindung der Formel ASr₂Nb₃O₁₀, wobei A für ein Element der Gruppe K⁺, Cs⁺ und Rb⁺ steht, mit wässriger Salpetersäure (HNO₃) bei einer Temperatur von 40 bis 70 °C behandelt wird.

7. Schichtniobat gemäß Anspruch 6, **dadurch gekennzeichnet, dass** die Behandlung mit der wässrigen Salpetersäure bei einer Temperatur von 50 bis 65 °C erfolgt.

8. Schichtniobat gemäß wenigstens einem der Ansprüche 6 oder 7, **dadurch gekennzeichnet, dass** die Konzentration der wässrigen Salpetersäurelösung 0,5 bis 2,5 M, vorzugsweise 0,5 bis 1,5 M beträgt.

9. Verfahren zur Herstellung eines Schichtniobats gemäß wenigstens einem der Ansprüche 1 bis 8, umfassend das Behandeln einer Verbindung der allgemeinen Formel ASr₂Nb₃O₁₀, wobei A für ein Element der Gruppe K⁺, Cs⁺ und Rb⁺ steht, mit wässriger Salpetersäure (HNO₃), **dadurch gekennzeichnet, dass** das Behandeln bei einer Temperatur von 40 bis 70 °C, vorzugsweise 50 bis 65 °C erfolgt.

10. Verwendung eines Schichtniobats gemäß wenigstens einem der Ansprüche 1 bis 8 als Photokatalysator, vorzugsweise für die photoinduzierte Wasserspaltung.

11. Photokatalysator umfassend ein Schichtniobat gemäß wenigstens einem der Ansprüche 1 bis 8.

12. Photokatalysator gemäß Anspruch 11, **dadurch gekennzeichnet, dass** der Photokatalysator weiterhin einen Rhodium-Cokatalysator aufweist.

## Claims

1. Layered niobate of the formula [HₐA_{b}]⁺[Sr₂Nb₃O₁₀]⁻, where [Sr₂Nb₃O₁₀]⁻ forms the main layers and [HₐA_{b}]⁺ forms the interlayers, where H is a group consisting of H⁺ and H₃O⁺ and A is an element of the group of K⁺, Cs⁺ and Rb⁺, where 0.6 ≤ a ≤ 1 and 0 ≤ b ≤ 0.4, where a + b = 1, **characterized in that** the layered niobate has different spacings between the main layers.

2. Layered niobate according to Claim 1, **characterized in that** the layered niobate is a layered perovskite of the Dion-Jacobson type.

3. Layered niobate according to at least one of the preceding claims, **characterized in that** the layered niobate has a hydrated and a dehydrated phase.

4. Layered niobate according to at least one of the preceding claims, **characterized in that** the layered niobate has a degree of protonation of at least 60%, preferably more than 70%, particularly preferably 80% to 100%, the degree of protonation being determined by means of EDX.

5. Layered niobate according to at least one of the preceding claims, **characterized in that** A is a potassium ion.

6. Layered niobate according to at least one of the preceding claims, **characterized in that** the layered niobate is produced by treating a compound of the formula ASr₂Nb₃O₁₀, where A is an element of the group of K⁺, Cs⁺ and Rb⁺, with aqueous nitric acid (HNO₃) at a temperature of 40°C to 70°C.

7. Layered niobate according to Claim 6, **characterized in that** the treatment with the aqueous nitric acid is performed at a temperature of 50°C to 65°C.

8. Layered niobate according to at least one of Claims 6 and 7, **characterized in that** the concentration of the aqueous nitric acid solution is 0.5 to 2.5 M, preferably 0.5 to 1.5 M.

9. Process for producing a layered niobate according to at least one of Claims 1 to 8, comprising the treatment of a compound of the general formula ASr₂Nb₃O₁₀, where A is an element of the group of K⁺, Cs⁺ and Rb⁺, with aqueous nitric acid (HNO₃), **characterized in that** the treatment is performed at a temperature of 40°C to 70°C, preferably 50°C to 65°C.

10. Use of a layered niobate according to at least one of Claims 1 to 8 as a photocatalyst, preferably for photoinduced splitting of water.

11. Photocatalyst comprising a layered niobate according to at least one of Claims 1 to 8.

12. Photocatalyst according to Claim 11, **characterized in that** the photocatalyst further comprises a rhodium cocatalyst.

## Revendications

1. Niobate lamellaire de formule [HₐA_{b}]⁺[Sr₂Nb₃O₁₀]⁻, où [Sr₂Nb₃O₁₀]⁻ constitue les couches principales et [HₐA_{b}]⁺ constitue les couches intermédiaires, H⁺ représentant un groupe qui consiste en H⁺ et H₃O⁺ et A représentant un élément du groupe K⁺, Cs⁺ et Rb⁺, où 0,6 ≤ a ≤ 1 et 0 ≤ b ≤ 0,4, où a + b = 1, **caractérisé en ce que** le niobate lamellaire comporte différents espacements entre les couches principales.

2. Niobate lamellaire selon la revendication 1, **caractérisé en ce que** pour ce qui est du niobate lamellaire il s'agit d'une perowskite lamellaire du type Dion-Jacobson.

3. Niobate lamellaire selon au moins une des revendications précédentes, **caractérisé en ce que** le niobate lamellaire comporte une phase hydratée et une phase déshydratée.

4. Niobate lamellaire selon au moins une des revendications précédentes, **caractérisé en ce que** le niobate lamellaire présente un degré de protonation d'au moins 60 %, de préférence de plus de 70 %, de façon particulièrement préférée de 80 à 100 %, le degré de protonation étant déterminé par EDX.

5. Niobate lamellaire selon au moins une des revendications précédentes, **caractérisé en ce que** A est un ion potassium.

6. Niobate lamellaire selon au moins une des revendications précédentes, **caractérisé en ce que** le niobate lamellaire est produit par le fait qu'un composé de formule ASr₂Nb₃O₁₀, A représentant un élément du groupe K⁺, Cs⁺ et Rb⁺, est traité par de l'acide nitrique (HNO₃) aqueux à une température de 40 à 70 °C.

7. Niobate lamellaire selon la revendication 6, **caractérisé en ce que** le traitement par l'acide nitrique aqueux s'effectue à une température de 50 à 65 °C.

8. Niobate lamellaire selon au moins une des revendications 6 et 7, **caractérisé en ce que** la concentration de la solution aqueuse d'acide nitrique vaut 0,5 à 2,5 M, de préférence 0,5 à 1,5 M.

9. Procédé pour la production d'un niobate lamellaire selon au moins une des revendications 1 à 8, comprenant le traitement d'un composé de formule générale ASr₂Nb₃O₁₀, A représentant un élément du groupe K⁺, Cs⁺ et Rb⁺, par de l'acide nitrique (HNO₃) aqueux, **caractérisé en ce que** le traitement s'effectue à une température de 40 à 70 °C, de préférence 50 à 65 °C.

10. Utilisation d'un niobate lamellaire selon au moins une des revendications 1 à 8 en tant que photocatalyseur, de préférence pour la dissociation photo-induite de l'eau.

11. Photocatalyseur comprenant un niobate lamellaire selon au moins une des revendications 1 à 8.

12. Photocatalyseur selon la revendication 11, **caractérisé en ce que** le photocatalyseur comporte en outre un co-catalyseur à base de rhodium.
